# EUROPÄISCHE PATENTSCHRIFT

(11) **EP 2 846 071 B1**
(45) Veröffentlichungstag und Bekanntmachung des Hinweises auf die Patenterteilung: **22.06.2016**
(21) Anmeldenummer: 14183685.8
(22) Anmeldetag: 05.09.2014
(51) Int. Cl.: F16L 11/10, F16L 11/115, B60H 1/00, F16L 11/11, F16L 11/12, F16L 27/107, B61D 27/00, F16L 11/15, F24F 13/02

(54) **Flexibler Kanal**
Flexible duct
Canal flexible

(30) Priorität: 09.09.2013 DE 202013008020 U
(43) Veröffentlichungstag der Anmeldung: 11.03.2015
(73) Patentinhaber: Schillig, Heinz-Uwe, 33649 Bielefeld (DE)
(72) Erfinder: Schillig, Heinz-Uwe, 33649 Bielefeld (DE)
(74) Vertreter: Prüfer & Partner mbB Patentanwälte · Rechtsanwälte

(56) Entgegenhaltungen:
- EP-A1- 1 726 400
- DE-A1- 19 721 068
- FR-A5- 2 087 525
- US-A- 3 860 043
- US-A- 6 116 288

## Beschreibung

Die Erfindung betrifft einen flexiblen Kanal, insbesondere einen flexiblen Luftführungskanal.

Flexible Kanäle, insbesondere Luftführungskanäle, kommen zum Einsatz, wenn eine zuverlässige Führung von Luft oder Kabeln oder ähnlichem in einem Führungskanal auch bei einer Biegebewegung erwünscht ist. Solch eine Biegebewegung tritt beispielsweise in Zügen zwischen einzelnen Waggons, in Straßenbahnen oder in Gelenkbussen auf.

Dafür werden bekanntermaßen so genannte Faltenbalge verwendet. Diese können sich, beispielsweise in einer Kurvenfahrt, auf einer Kurveninnenseite zusammenfalten und auf einer Kurvenaußenseite ausdehnen. Somit ist eine Kurvenfahrt möglich, ohne dass der Kanal beschädigt wird.

Wenn die Kanäle jedoch vorgesehen sind, ein bestimmtes Volumen eines Liquids, beispielsweise von Luft, zu transportieren, ist es mitunter von großer Bedeutung, dass auch im Falle des gebogenen Kanals ein entsprechendes Volumen durch den Kanal lieferbar ist. Die bekannten Kanäle können jedoch aufgrund des Falt-Verhaltens und des Dehnverhaltens ihren Querschnitt im Inneren des Kanals verändern. Somit kann bei einer Kurvenfahrt nicht mehr sichergestellt werden, dass dasselbe Volumen sicher durch den Kanal geführt wird, wie bei dem entsprechend gerade gestreckten Kanal.

Des Weiteren muss bei einem herkömmlichen Kanal aufgrund der Falten in dem Kanal bei einer Verbiegung, ein Spielraum außerhalb des Kanals vorgesehen sein, in den sich der Kanal bzw. die sich faltenden Abschnitte erstrecken können. Dies vergrößert den notwendigen Bauraum zur Aufnahme des Kanals.

Zudem kann es bei den herkömmlichen Kanälen aufgrund der Faltung des Kanals an den Faltkanten im Inneren des Kanals im Falle eines Luftführungskanals zu Verwirbelungen kommen. Diese Verwirbelungen können wiederum das transportierte Volumen verringern, die Lautstärke erhöhen oder erschweren eine Steuerung des Drucks, bei dem die Luft durch den Kanal geführt werden soll, etc.

Es ist daher die Aufgabe der vorliegenden Erfindung, wenigstens eines der obigen Probleme zu lösen, und einen flexiblen Kanal zur Verfügung zu stellen, der einen geringen Bauraum benötigt und auch in gebogenem Zustand zuverlässig einsetzbar ist.

Diese Aufgabe wird gelöst mit einem Kanal gemäß Anspruch 1. Vorteilhafte Weiterbildungen sind Gegenstand der Unteransprüche.

Ein erfindungsgemäßer flexibler Kanal weist einen Führungsabschnitt, vorzugsweise einen Luftführungsabschnitt, und zumindest zwei Stabilisierungsabschnitte, vorzugsweise eine Mehrzahl an Stabilisierungsabschnitten auf. Die Stabilisierungsabschnitte sind in einer Umfangsrichtung um den Führungsabschnitt ausgebildet und an dem Führungsabschnitt befestigt. Die Stabilisierungsabschnitte sind mit einem vorbestimmten Abstand entlang einer Führungsrichtung des Kanals voneinander beabstandet. Der Abstand der Stabilisierungsrahmen ist dabei so gewählt, dass eine Biegelänge eines Führungsabschnittmaterials größer ist, als der Abstand zwischen zwei benachbarten Stabilisierungsrahmen.

Diese Stabilisierungsrahmen verhindern aufgrund ihres ausreichend gering gewählten Abstands, dass sich das Führungsabschnittmaterial falten bzw. abknicken kann.

Durch eine derartige Ausbildung des Führungskanals faltet sich der Luftführungsabschnitt beim Verbiegen also nicht, so dass der innere Querschnitt des Kanals nahezu konstant bleibt. Somit kann ein Luftvolumen auch bei einem gebogenen Kanal zuverlässig transportiert werden. Da keine Faltung beim Verbiegen auftritt, kann damit auch der Bauraum, in dem der Kanal vorgesehen ist, eng an die Außenkonturen des Kanals bzw. an die Ausdehnung der Stabilisierungsabschnitte angepasst werden, da der Kanal weitgehend volumen- und querschnittkonstant bleibt.

Mit Biegelänge wird dabei in der Regel die Länge bezeichnet, bei der sich ein Material, hier das Material des Führungsabschnitts, von selbst biegen oder sogar falten bzw. knicken würde. Unter Biegen des Materials wird vorliegend eine Verformung des Materials verstanden, bei der Innen- und Außenseite des Materials eine annähernd gleiche Krümmung aufweisen, wobei die Krümmung einen endlichen Krümmungsradius aufweist. Von einer Faltung wird hingegen vorliegend gesprochen, wenn zwei aneinandergrenzende Abschnitte des Materials in einem, in der Regel spitzen, geometrischen Winkel zueinander stehen.

Die Biegelänge ist eine inhärente Eigenschaft des betreffenden Materials. Es sei jedoch bemerkt, dass die Biegelänge konventionell für unbelastetes, insbesondere nicht gedehntes oder gebogenes, Material definiert ist. Material, dass beispielsweise einer Kraft ausgesetzt ist, die eine elastische Verformung bewirkt, wird sich bei Wegfall der Kraft zunächst zurück verformen. Erst nach der Entspannung des Materials kann in der Regel eine Eigenverbiegung oder eine Faltung auftreten.

Entgegen der üblichen Definition wird vorliegend jedoch mit einer Biegelänge die Länge gemeint, bei der sich das Material unabhängig von einer Vorbelastung, beispielsweise einer elastischen Verformung des Materials, falten bzw. knicken kann.

Die Biegelänge ist dabei von der Elastizität und insbesondere von der elastischen Kompressibilität des Materials abhängig. Ein steiferes Material weist eine höhere Biegelänge auf als ein weicheres Material. Vorliegend ist es insbesondere relevant, bei welcher Längenverkürzung zwischen zwei benachbarten Stabilisierungsrahmen, wie später beschrieben, eine Faltung des Führungskanalmaterials auftreten kann. Ist die Biegelänge kleiner als der Abstand zwischen zwei Stabilisierungsrahmen, so kann eine Biegung oder eine Faltung auftreten. Ist die Biegelänge gleich dem oder größer als der Abstand zwischen zwei benachbarten Stabilisierungsrahmen, so kann gerade keine Faltung oder Biegung des Materials auftreten. In diesem Fall kommt es lediglich zu einer Kompression, beispielsweise einer vorzugsweise reversiblen und elastischen Stauchung, des Materials zwischen benachbarten Stabilisierungsrahmen. Analog kann es natürlich auch zu einer Dehnung des Materials kommen.

Die Biegelänge ist weiterhin, wie oben erwähnt, von einer, hier elastischen, Verformung abhängig, wobei bei einer elastischen Dehnung die Biegelänge zunimmt. Vorliegend ist die Biegelänge auch im Falle eines gebogenen Führungskanals und dem durch die Verbiegung größeren Abstand zwischen zwei benachbarten Stabilisierungsrahmen an einer Kurvenaußenseite, größer als der Abstand zwischen den benachbarten Stabilisierungsrahmen.

Während der oben erwähnte Führungsabschnitt in einer bevorzugten Ausführungsform ein Luftführungsabschnitt ist, kann dieser auch andere Funktionen erfüllen. So kann es sich analog um einen Führungskanal für ein anderes gasförmiges, aber auch für ein flüssiges Material handeln. Zudem ist es denkbar, dass der Kanal lediglich als Kabelschacht oder ähnliches verwendet wird. Der Kanal wird im Folgenden lediglich als Führungskanal bezeichnet, ohne ihn auf die bevorzugte Ausführungsform als Luftführungskanal zu beschränken.

In einer Weiterbildung der vorliegenden Erfindung weist der Führungsabschnitt ein elastisches Material auf. So kann der Kanal gebogen werden, ohne dass das Material aufgrund einer Dehnungsbeanspruchung an einer Biegungsaußenseite Schaden nimmt. Die Biegungsaußenseite ist dabei der Abschnitt des Führungskanals, der in einem gebogenen Zustand den größeren Biegungsradius bzw. Krümmungsradius aufweist.

Das Material kann auch ein kompressibles Material sein, insbesondere ein elastisch-kompressibles Material. Damit ist ein Material gemeint, dass sich nach einer Kompression aufgrund der elastischen Eigenschaften wieder in die Ausgangsform zurück verformen kann. Somit kann das Material auf einer Biegungsinnenseite, komprimiert, also gestaucht, werden. Eine Biegungsinnenseite, im Gegensatz zu der Biegungsaußenseite, ist dabei der Abschnitt des Kanals mit dem kleineren Krümmungsradius. Je höher die Kompressibilität des Materials also ist, desto mehr kann das Material also zusammen gestaucht werden. Um so weniger wird das Material entsprechend dazu neigen, sich gleichzeitig zu falten. Durch diese Materialeigenschaft kann der Abstand zwischen zwei benachbarten Stabilisierungsabschnitten an dem Führungsabschnitt vergrößert werden, ohne dass es zu einer Faltung des Materials aufgrund der Biegung des Kanals kommt.

Es wird somit aufgrund der Stauchung bzw. der Kompression des Materials lediglich ein Ausbauchen des Materials auftreten. Dieses kann sowohl nach innen, also auf einer inneren Oberfläche des Kanals, als auch nach außen, also auf einer äußeren Oberfläche des Kanals, auftreten, wenn eine starke Stauchung, also eine starke Verbiegung des Kanals, vorliegt. Dies verändert den Querschnitt des Kanals jedoch nicht oder nur minimal. Auch wird, durch Verhindern von Faltenbildung eine Ursache für das Ausbilden von Verwirbelungen im Kanal reduziert. Der Kanal kann somit die Luft, oder ein anderes Liquid, zuverlässiger führen oder transportieren.

Das Material des Führungsabschnitts kann zudem ein vulkanisiertes Material aufweisen. Es kann insbesondere ein Zuschnitt eines Endlosstücks des Führungsmaterials sein. Der Führungsabschnitt kann dabei auch einstückig und/oder nahtlos ausgebildet sein. Dadurch kann zum einen der Herstellungsprozess vereinfacht werden. Zum anderen kann somit aufgrund fehlender Nähte eine Zuverlässigkeit des Führungskanals beim Führen eines Liquids, beispielsweise von Luft, erhöht werden.

In bestimmten Ausführungsformen kann der Führungsabschnitt insbesondere ein Gummigewebe und/oder ein Polyurethan-Gewebe (PU-Gewebe) aufweisen.

Der Führungsabschnitt kann auch ein feuerfestes Material aufweisen. Alternativ oder zusätzlich kann das Material des Führungsabschnitts zumindest teilweise, beispielsweise an einer äußeren Oberfläche oder an einer inneren Oberfläche, eine Silikonbeschichtung aufweisen. Eine solche Silikonbeschichtung kann natürlich auch komplett auf der Oberfläche des Führungsabschnitts vorgesehen sein. Vorzugsweise wird ein Material verwendet, das gängige Kriterien für Brandschutzprüfungen erfüllt. Insbesondere ist denkbar, dass der Führungsabschnitt ein Material, das als Nomex^{®} bekannt ist, aufweist.

Dadurch kann der erfindungsgemäße Kanal auch an Orten eingesetzt werden, wo eine Brandverhütung oder ein Brandschutz unbedingt notwendig ist, wie beispielsweise in Transportmitteln, an schwer zugänglichen Stellen, oder Ähnliches. Somit kann eine Sicherheit bei der Verwendung des Kanals erhöht werden.

Weiterhin kann zumindest einer, vorzugsweise mehrere, insbesondere alle der Stabilisierungsabschnitte ein Rohrmaterial aufweisen. Dabei kann der gesamte Stabilisierungsabschnitt als Rohrmaterial ausgebildet sein, oder nur ein Teil des Stabilisierungsabschnitts.

Das Rohrmaterial kann Stahl, insbesondere nicht-rostenden Stahl, aufweisen. Zudem oder alternativ kann das Rohrmaterial Kupfer aufweisen.

Alternativ, oder für bestimmte Abschnitte des Stabilisierungsrahmens, kann ein Vollmaterial aus den oben genannten Rohrmaterialien vorgesehen sein. Dabei muss, bei einer Verwendung von Rohrmaterial-Abschnitten und Vollmaterial-Abschnitten, das Rohrmaterial nicht dasselbe Material sein, wie das Vollmaterial.

Eine teilweise Verwendung von Rohrmaterial und von Vollmaterial kann beispielsweise vorgenommen werden, wenn der Kanal schmal aber breit ist. So könnte die Längsseite des Kanals als rohrartiger Teil des Stabilisierungsrahmens ausgebildet sein, während der schmale Teil, ein stirnflächiger Teil des Stabilisierungsabschnitts auf dem Führungsabschnitt, als Vollmaterial ausgebildet ist.

Durch Verwendung eines rohrartigen Materials kann die Stabilität des Kanals erhöht werden, während eine Gewichtsreduzierung erreicht werden kann. Durch Verwendung eines Vollmaterials kann die Stabilität einerseits erhöht werden. Zudem kann ein Produktionsprozess vereinfacht werden.

Natürlich sind auch andere Materialien neben Stahl oder Kupfer verwendbar, wie dem Fachmann unmittelbar klar ist, ohne sich von dem Erfindungsgedanken zu entfernen. Diese können Eisen, Aluminium, andere Metalle, Kunststoffe etc. enthalten.

Erfindungsgemäß ist an dem Führungsabschnitt wenigstens ein Sicherungsstreifen zur Aufnahme wenigstens eines Teils eines Stabilisierungsabschnitts vorgesehen.

Ein solcher Sicherungsstreifen kann insbesondere taschenförmig oder schlaufenförmig ausgebildet sein. Dabei ist der Sicherungsstreifen an dem Führungsabschnitt fixiert. Diese Fixierung kann beispielsweise durch Vernähen und/oder Verkleben erfolgen. Der Sicherungsstreifen wird dabei derart an dem Führungsabschnitt befestigt, dass in der entstehenden Tasche bzw. Schlaufe zumindest ein Teil eines Stabilisierungsabschnitts aufgenommen werden kann. Es ist auch denkbar, dass ein Sicherungsstreifen derart ausgebildet und befestigt ist, dass eine Mehrzahl an Stabilisierungsabschnitten oder wenigstens Teile davon mit demselben Sicherungsstreifen befestigt werden können.

Auch kann das Material des bzw. der Sicherungsstreifen dasselbe Material aufweisen, wie der Führungsabschnitt.

Der Stabilisierungsrahmen kann somit zuverlässig an dem Führungsabschnitt befestigt werden, ohne die Funktion des flexiblen Kanals zu beeinträchtigen. Weiterhin kann durch diese Befestigungsart die Querschnittform des Kanals einfach durch die Form der Stabilisierungsabschnitte vorgegeben werden. Diese Form kann folglich beliebig, beispielsweise quadratisch, rechteckig, rund oder oval sein. Diese Formen sind jedoch nicht beschränkend für die vorliegende Erfindung. Vielmehr kann quasi jede beliebige Form angenommen werden, die durch die Stabilisierungsabschnitte vorgegeben werden kann.

Ein oder mehrere Sicherungsstreifen können so angebracht sein, dass sie an der Stirnseite und an der Längsseite des Kanals vorgesehen sind, wobei wenigstens eine Ecke des Stabilisierungsrahmens nicht in einem Sicherungsstreifen vorgesehen ist. SO kann die Ecke des Stabilisierungsrahmens beispielsweise bei einer horizontalen Montage des Luftführungskanals an dieser freien Ecke befestigt, z.B. aufgehängt werden.

Eine horizontale Bewegung und Beweglichkeit zwischen einer minimalen Länge und einer maximalen Länge des Führungskanals wird dadurch nicht beeinträchtigt.

Dabei ist auch denkbar, dass sich die Querschnittform des Kanals, im Verlaufe des Kanals verändern kann. Dazu müssen lediglich die benachbarten Stabilisierungsabschnitte mit einer sich verändernden Form ausgebildet werden. Somit kann ein erfindungsgemäßer Luftführungskanal mit größerer Flexibilität an die entsprechende Verwendung angepasst werden.

Ein derartiger flexibler Kanal kann beispielsweise als Luftführungskanal, insbesondere als Luftführungskanal für Klimaanlagen und/oder Belüftungsanlagen und/oder Heizungssysteme verwendet werden. Natürlich sind weitere Anwendungsgebiete ebenfalls denkbar, bei denen im Querschnitt flexible Kanäle eingesetzt werden.

Speziell kann der erfindungsgemäße Kanal in Transportmitteln verwendet werden, beispielsweise in Schienenfahrzeugen wie Straßenbahnen oder Zügen, in Straßenfahrzeugen wie Autos oder Bussen, in Seilbahnen und/oder in Bergbahnen. Weitere Einsatzmöglichkeiten können sich ebenfalls beispielsweise in beweglichen Maschinen oder Maschinenteilen ergeben. Insofern sind die obigen Beispiele nicht beschränkend für die vorliegende Erfindung.

Weitere Einzelheiten, Vorteile und Weiterbildungen der Erfindung ergeben sich aus den Ausführungsbeispielen, die anhand der Figur näher erläutert werden. Dabei zeigt:

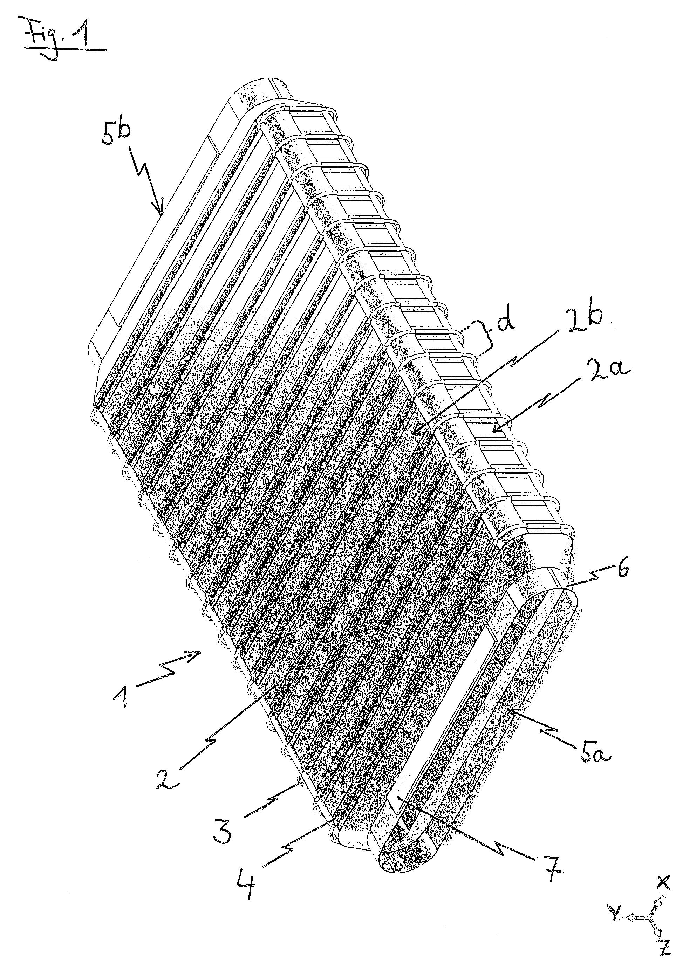

Fig. 1 einen erfindungsgemäßen Luftführungskanal gemäß einer Ausführungsform der Erfindung.

Fig. 1 zeigt einen erfindungsgemäßen Kanal gemäß einer bevorzugten Ausführungsform der Erfindung, wobei der Kanal in der bevorzugten Ausführungsform ein Luftführungskanal 1 ist. Der Luftführungskanal 1 weist einen Führungsabschnitt 2 auf. Der Führungsabschnitt 2 ist schlauch- bzw. tunnelartig ausgebildet. In der gezeigten Ausführungsform hat der Führungsabschnitt einen im Wesentlichen rechtwinkeligen Querschnitt. Dabei ist eine Stirnseite 2a kleiner als eine Längsseite 2b des Führungsabschnitts 2.

Die Ecken, an denen die Stirnseiten 2a und die Längsseiten 2b zusammenstoßen sind vorliegend abgerundet. Der Führungsabschnitt 2 weist zwei offene Enden 5a, 5b auf, die lediglich zur besseren Beschreibung und nicht zur Beschränkung als ein Lufteinlass-Ende 5a und ein Luftauslass-Ende 5b bezeichnet werden. An den Enden 5a, 5b läuft der Führungskanal 1 verjüngend zu und ist jeweils mit einem Befestigungsabschnitt 6 versehen. Der Befestigungsabschnitt 6 ist vorliegend oval ausgebildet und erstreckt sich kragenartig in der Luftführungsrichtung bzw. gegen die Luftführungsrichtung senkrecht zu den offenen Enden 5a, 5b. In anderen Ausführungsformen ist auch eine andere Form des Befestigungsabschnitts, beispielsweise eine rechtwinkelige Form, möglich.

Weiterhin ist an dem Befestigungsabschnitt 6 ein Befestigungsmittel 7 vorgesehen. Dieses dient zum Befestigen und Stabilisieren des Befestigungsabschnitts 6. Das Befestigungsmittel 7 ist vorliegend rechteckig ausgebildet und ist auf dem kragenartigen Vorsprung des Befestigungsabschnitts 6 parallel zu der Längsseite 2b des Führungsabschnitts 2 ausgebildet.

Zudem weist der Luftführungskanal 1 eine Mehrzahl an Stabilisierungsabschnitten 3 auf. Die Stabilisierungsabschnitte 3 sind vorliegend rohrartig ausgebildet. Zudem sind die Stabilisierungsabschnitte 3 ebenfalls rechteckig mit abgerundeten Ecken ausgebildet, der Querschnittform des Führungsabschnitts 2 folgend. Die Stabilisierungsabschnitte 3 sind dabei in ihrer Form weitgehend ähnlich zu dem Führungsabschnitt 2 ausgebildet, haben also eine entsprechende Breite entlang der Längsseite 2b und eine entsprechende Länge entlang der Stirnseite 2a. Wie weiter in Fig. 1 zu erkennen ist, ist zwischen den Stabilisierungsabschnitten 3 und dem Führungsabschnitt 2 jedoch an den abgerundeten Ecken ein kleiner Abstand vorgesehen. So kann eine Beweglichkeit des Kanals beim Verbiegen sichergestellt werden.

Die Stabilisierungsabschnitte 3 sind entlang des Führungsabschnitts 2 in regelmäßigem Abstand d zu den benachbarten Führungsabschnittteilen von dem Lufteinlass-Ende zu dem Luftauslass-Ende vorgesehen. Dabei ist der Abstand d kleiner als die dem Material innewohnende Biegelänge. Es ist in alternativen Ausführungsformen denkbar, dass die Abstände zwischen den Stabilisierungsabschnitten 3 nicht gleichmäßig vorgesehen sind, abhängig von dem Einsatzzweck des Kanals.

Des Weiteren sind in der dargestellten Ausführungsform Sicherungsstreifen 4 vorgesehen. Die Sicherungsstreifen 4 sind entlang der Stabilisierungsabschnitte 3 auf den Stirnseiten 2a und auf den Längsseiten 2b vorgesehen. Lediglich im Bereich der abgerundeten Ecken ist kein Sicherungsstreifen 4 vorgesehen.

Die Sicherungsstreifen 4 sind derart ausgebildet, dass sie in einer Luftführungsrichtung des Kanals beidseits eines Stabilisierungsabschnitts 3 an dem Führungsabschnitt 2 befestigt sind. Dadurch bilden die Sicherungsstreifen 4 eine Lasche, die von einer Stoßecke zwischen Stirnseite 2a und Längsseite 2b zu einer benachbarten derartigen Ecke verläuft. Der maximale Innendurchmesser eines solchen Sicherungsstreifens 4 entspricht vorliegend gerade dem Durchmesser des rohrartigen Stabilisierungsrahmens und nimmt diesen auf. Somit wird der Stabilisierungsrahmen mit dem Führungsabschnitt 2 gekoppelt und der flexible Führungsabschnitt 2 kann der Form des Stabilisierungsrahmens 3 angepasst werden.

In anderen Ausführungsformen können die Sicherungsstreifen auch nur auf einem Teil der Längsseiten oder der Stirnseiten vorgesehen sein. Auch können mehrere Sicherungsstreifenabschnitte auf der Längsseite und/oder auf der Stirnseite vorgesehen sein.

Wird der Kanal 1 gebogen, ist klar, dass auf einer Biegungsinnenseite der Abstand der Stabilisierungsrahmen 3 zueinander kleiner wird als der Abstand in Ruheposition. Das Material des Führungsabschnitts 2 wird dabei gebogen und/oder gestaucht.

Zusammenfassend weist ein flexibler Kanal 1 einen Führungsabschnitt 2 und wenigstens zwei, vorzugsweise eine Mehrzahl, Stabilisierungsabschnitte 3 auf, wobei die Stabilisierungsabschnitte 3 in einer Umfangsrichtung um den Führungsabschnitt 2 ausgebildet und an dem Führungsabschnitt 2 befestigt sind. Dabei ist der Abstand a der Stabilisierungsabschnitte 3 derart gewählt, dass eine Biegelänge eines Führungsabschnittmaterials größer ist, als der Abstand a zwischen zwei benachbarten Stabilisierungsrahmen 3.

## Patentansprüche

1. Flexibler Kanal (1), aufweisend: einen Führungsabschnitt (2) und wenigstens zwei Stabilisierungsabschnitte (3), wobei die Stabilisierungsabschnitte (3) in einer Umfangsrichtung um den Führungsabschnitt (2) ausgebildet und an dem Führungsabschnitt (2) befestigt sind,
**dadurch gekennzeichnet, dass**
der Abstand (a) der Stabilisierungsabschnitte (3) derart gewählt ist, dass eine Biegelänge eines Führungsabschnittmaterials größer ist, als der Abstand (d) zwischen zwei benachbarten Stabilisierungsabschnitten (3) und an dem Führungsabschnitt (2) wenigstens ein Sicherungsstreifen (4) zur Aufnahme von wenigstens einem Teil eines Stabilisierungsabschnitts (3) vorgesehen ist.

2. Flexibler Kanal gemäß Anspruch 1, wobei der Führungsabschnitt (2) ein elastisches Material aufweist.

3. Flexibler Kanal gemäß einem der vorgehenden Ansprüche, wobei der Führungsabschnitt (2) ein kompressibles Material aufweist.

4. Flexibler Kanal gemäß einem der vorhergehenden Ansprüche, wobei der Führungsabschnitt (2) einstückig, insbesondere nahtlos ausgebildet ist.

5. Flexibler Kanal gemäß einem der vorhergehenden Ansprüche, wobei der Führungsabschnitt (2) ein vulkanisiertes Material aufweist.

6. Flexibler Kanal gemäß einem der vorhergehenden Ansprüche, wobei wenigstens einer der Stabilisierungsabschnitte (3) ein Rohrmaterial, vorzugsweise eine Stahlrohr, insbesondere ein nicht-rostendes Stahlrohr, oder ein Kupferrohr und/oder ein Vollmaterial, vorzugsweise aus Stahl, insbesondere aus nichtrostendem Stahl, oder Kupfer aufweist.

7. Flexibler Kanal gemäß Anspruch 1, wobei der Sicherungsstreifen (4) taschenartig ausgebildet ist und an dem Führungsabschnitt (2) fixiert, vorzugsweise angenäht und/oder festgeklebt ist.

8. Flexibler Kanal gemäß einem der vorhergehenden Ansprüche, wobei der Führungsabschnitt (2) und/oder der Stabilisierungsrahmen (3) ein feuerfestes Material aufweist.

9. Flexibler Kanal (1) gemäß einem der vorhergehenden Ansprüche, der als Luftführungskanal, insbesondere für Klimaanlagen und/oder Belüftungsanlagen und/oder Heizungssysteme vorgesehen ist.

10. Flexibler Kanal (1) gemäß Anspruch 9, der in einem Schienenfahrzeug und/oder Straßenfahrzeug und/oder Seilbahn und/oder Bergbahn vorgesehen ist.

## Claims

1. Flexible channel (1) comprising: a guide section (2) and at least two stabilisation sections (3), wherein the stabilisation sections (3) are formed in a circumferential direction around the guide section (2) and attached to the guide section (2),
**characterised in that**
the distance (a) between the stabilisation sections (3) is selected in such a way that a bending length of a guide section material is greater than the distance (d) between two adjacent stabilisation sections (3) and on the guide section (2) at least one securing strip (4) for receiving at least one part of a stabilisation section (3) is provided.

2. Flexible channel according to claim 1 wherein the guide section (2) is made of an elastic material.

3. Flexible channel according to any one of the preceding claims, wherein the guide section (2) is made of a compressible material.

4. Flexible channel according to any one of the preceding claims wherein the guide section (2) is produced in one piece, preferably without seams.

5. Flexible channel according to any one of the preceding claims wherein the guide section (2) is made of a vulcanised material.

6. Flexible channel according to any one of the preceding claims, wherein at least one of the stabilisation sections (3) is made of a tubular material, preferably a steel pipe, more particularly a non-rusting steel pipe, or a copper pipe and/or a solid material, preferably of steel, more particular non-rusting steel or copper.

7. Flexible channel according to claim 1 wherein the securing strip (4) is designed in a pocket-like manner and is attached, preferably sewn onto and/or adhered to, the guide section (2).

8. Flexible channel according to any one of the preceding claims wherein the guide section (2) and/or the stabilisation frame (3) is/are made of a fire-proof material.

9. Flexible channel (1) according to any one of the preceding claims which is envisaged as an air guiding channel, more particularly for air-conditioning systems and/or ventilation systems and/or heating systems.

10. Flexible channel (1) according to claim 9 which is provided in a rail vehicle and/or road vehicle and/or cable car and/or mountain railway.

## Revendications

1. Canal flexible (1), comportant : un tronçon de guidage (2) et au moins deux tronçons de stabilisation (3), les tronçons de stabilisation (3) étant conçus autour du tronçon de guidage (2) dans une direction circonférentielle et étant fixés au tronçon de guidage (2),
**caractérisé en ce que** l'écart (a) des tronçons de stabilisation (3) est choisi de telle sorte qu'une longueur de flexion d'un matériau de tronçon de guidage est supérieure à l'écart (d) entre deux tronçons de stabilisation (3) voisins et **en ce qu'**au moins une bande de sécurité (4) est prévue sur le tronçon de guidage (2) pour loger au moins une partie d'un tronçon de stabilisation (3).

2. Canal flexible selon la revendication 1, dans lequel le tronçon de guidage (2) comporte un matériau élastique.

3. Canal flexible selon l'une des revendications précédentes, dans lequel le tronçon de guidage (2) comporte un matériau compressible.

4. Canal flexible selon l'une des revendications précédentes, dans lequel le tronçon de guidage (2) est conçu d'un seul tenant, notamment sans soudure.

5. Canal flexible selon l'une des revendications précédentes, dans lequel le tronçon de guidage (2) comporte un matériau vulcanisé.

6. Canal flexible selon l'une des revendications précédentes, dans lequel au moins l'un des tronçons de stabilisation (3) comporte un matériau en tube, de préférence un tube d'acier, notamment un tube d'acier inoxydable, ou un tube de cuivre et/ou un matériau plein, de préférence en acier, notamment en acier inoxydable, ou en cuivre.

7. Canal flexible selon la revendication 1, dans lequel la bande de sécurité (4) est conçue comme une poche et fixée, de préférence cousue et/ou collée, au tronçon de guidage (2).

8. Canal flexible selon l'une des revendications précédentes, dans lequel le tronçon de guidage (2) et/ou le cadre de stabilisation (3) comporte un matériau ignifuge.

9. Canal flexible (1) selon l'une des revendications précédentes, qui est prévu comme canal de conduite d'air, notamment pour des installations de climatisation et/ou des installations d'aération et/ou des systèmes de chauffage.

10. Canal flexible (1) selon la revendication 9, qui est prévu dans un véhicule ferroviaire et/ou dans un véhicule routier et/ou dans un téléphérique et/ou dans un funiculaire.
